# EUROPEAN PATENT APPLICATION

(11) **EP 4 752 769 A1**
(43) Date of publication of application: **03.06.2026**
(21) Application number: 24215815.2
(22) Date of filing: 27.11.2024
(51) Int. Cl.: G06F 21/62

(54) **USER INTERACTION DATA MANAGEMENT**

(71) Applicant: SAP SE, 69190 Walldorf (DE)
(72) Inventor: Rumig, Jan, 69190 Walldorf (DE); Pursche, Andreas Kurt, 69190 Walldorf (DE); Wilkens, Norbert, 69190 Walldorf (DE); Omary, Lhoussine, 69190 Walldorf (DE); Mueller, Florian, 69190 Walldorf (DE); Schmitt, Renan, 69190 Walldorf (DE); Martins, Jorge, 69190 Walldorf (DE); Back, Katharina, 69190 Walldorf (DE); Pfenning, Jan, 69190 Walldorf (DE); Hase, Florian, 69190 Walldorf (DE); Carqueja, Filipe, 69190 Walldorf (DE)
(74) Representative: Fish & Richardson P.C.

(57) **Abstract**

The present disclosure relates to computer-implemented methods, software, and systems for providing data access to shared data. One example method includes managing a collection of records associated with interactions of users with one or more of a set of software products defined at a platform solution, wherein the collection of records is obtained according to relevant compliance policies for data storage defined correspondingly for the set of software products; and in response to receiving a request for data management in relation to a first record of the collection of records, determining a relevant compliance policy for the first record, the relevant compliance policy being associated with a respective software product of the set of software products; and providing access to the first record in accordance with a scope determined for the first record, the scope being based on the relevant compliance policy.

## Description

### TECHNICAL FIELD

The present disclosure relates to computer-implemented methods, software, and systems for data processing.

### BACKGROUND

Applications and application systems can generate and store data and/or data objects together with underlying metadata. Data objects can be defined to include multiple attributes (or properties) that can be associated with underlying metadata, different dimensions and/or measures, and access rights, among other examples. Data objects can be defined according to a data model and can be persisted in a database or storage layer. In some cases, applications interact with each other and exchange data, for example, data objects. One or more users of client devices can interact with the applications to perform tasks.

### SUMMARY

Implementations of the present disclosure are generally directed to computer-implemented method for user interaction data management.

In a first aspect, one example method may include operations, such as: managing a collection of records associated with interactions of users with one or more of a set of software products defined at a platform solution, wherein the collection of records is obtained according to relevant compliance policies for data storage defined correspondingly for the set of software products; and in response to receiving a request for data management in relation to a first record of the collection of records, determining a relevant compliance policy for the record, with the relevant compliance policy being associated with a respective software product of the set of software products; and providing access to the record in accordance with a scope determined for the record, and the scope being based on the compliance policy.

Other implementations of this first aspect include corresponding systems, apparatus, and computer programs, configured to perform the actions of the methods, encoded on computer storage devices.

In a second aspect, an example method may include defining data producers and data consumers of software applications defined on a platform solution; defining user interaction types to represent specific types of data that are to be produced by one or more of the data producers; defining a mapping between one or more purposes and one or more user interaction types, wherein a data consumer is allowed to consume a user interaction type stored by a data producer when the user interaction type is mapped to a respective purpose associated with the data consumer; configuring access configurations on tenant level for one or more customers of the platform solution, wherein the access configuration defines a set of purposes defines as active for users of a tenant of the platform solution; and in response to receiving a request from a user for performing a data read operation or data write operation at a first software application of the software applications, invoking a user data management service defined for the platform solution for performing evaluation of the access configurations and the mappings, wherein based on the performed evaluation, relevant data of a user interaction type that is allowed to be consumed or produced by the software application is provided to the first software application.

The present disclosure also provides a computer-readable storage medium coupled to one or more processors and having instructions stored thereon, which, when executed by the one or more processors, causes the one or more processors to perform operations in accordance with implementations of the methods provided herein.

The present disclosure further provides a system for implementing the methods provided herein. The system includes one or more processors and a computer-readable storage medium coupled to the one or more processors having instructions stored thereon which, when executed by the one or more processors, cause the one or more processors to perform operations in accordance with implementations of the methods provided herein.

It is appreciated that methods in accordance with the present disclosure can include any combination of the aspects and features described herein. That is, methods in accordance with the present disclosure are not limited to the combinations of aspects and features specifically described herein, but also include any combination of the aspects and features provided.

The details of one or more implementations of the present disclosure are set forth in the accompanying drawings and the description below. Other features and advantages of the present disclosure will be apparent from the description and drawings and from the claims.

### BRIEF DESCRIPTION OF DRAWINGS

FIG. 1 depicts an example architecture in accordance with implementations of the present disclosure.
FIG. 2 depicts an example system that can manage user interaction data records in accordance with implementations of the present disclosure.
FIG. 3 is a block diagram of an example illustration of components involved managing user interaction data in accordance with implementations of the present disclosure.
FIG. 4 is a block diagram of an example structure of managing user interaction data in accordance with implementations of the present disclosure.
FIG. 5 is a flowchart for an example method for providing access to user interaction data in accordance with implementations of the present disclosure.
FIG. 6 is a flowchart for an example method for managing user interaction data in accordance with implementations of the present disclosure.
FIG. 7A is a part of a block diagram of an example system for implementing user interaction data management in accordance with implementations of the present disclosure.
FIG. 7B is another part of a block diagram of an example system for implementing user interaction data management in accordance with implementations of the present disclosure.
FIG. 8 is a sequence diagram of an example method for managing user interaction data in accordance with implementations of the present disclosure.
FIG. 9 is a schematic illustration of example computer systems that can be used to execute implementations of the present disclosure.

### DETAILED DESCRIPTION

The present disclosure describes techniques for managing user interaction data records.

In some instances, software systems may store information about the outcomes of a task, such as transactional information in a database (e.g., purchase order information). However, information about the process of generating the outcome and context related to the creation and the outcome may not be collected. In some instances, such data related to the process and context of generating an outcome from an executed task, such as executing a transaction (e.g., purchase) in a system, can be stored and used for data analysis (e.g., used in the context of statistical analysis, automation, artificial intelligence, etc.).

For example, information related to a task (e.g., a process of the task execution and an outcome) may be related to how the user finds the correct information for generating a transaction (e.g., which systems are used to provide the data for a purchase order). As another example, the information may be related to the identification of a user associated with the task, and different requests performed by the user to perform the tasks (e.g., searching, filtering, sorting, and interacting, among other operations that can be performed by a user in relation to a task). In some more examples, the information may include data about user interactions, such as the number of clicks on a user interface, or at different interfaces, sequence of interactions, or other user actions with tools supporting the task execution (e.g., tools within the technical environment accessible to the user including applications, services, or databases, among others).

In some instances, data about user actions (or usage statistics) for one or more software solutions may be anonymized and used in various contexts (and different purposes as approved), including supporting automation of task execution, providing suggestions for task execution, guiding the user, etc. However, the anonymized data may have limited value for the personalization of software solution(s) to the individual user's circumstances and for automation including predictive analysis (e.g., using trained artificial intelligence (AI) models). Due to the anonymization, the data may no longer be linked to the user, and context describing the circumstances of the actions may be lost.

In some instances, to address the challenges provided by storing only a limited amount of data that is anonymized, in some implementations, user interaction data can be collected in a non-anonymized manner which is compliant with data protection and privacy regulations (e.g., defined for different software applications, services, tools, storages, or combination thereof as associated with different accounts or customers). In some instances, the user interaction data can include data for navigation steps, search logs, logs what functions of the product are used, or others. Implementing such regulations may set a high bar for the manner of collecting and using the data in a compliant way. The implementations of the present disclosure provide tools and techniques for supporting the collection of user interaction data and management of such data according to compliance criteria as defined for various stakeholders associated with the data (e.g., users for whom data is collected, scenarios for the data collection, tools for the data collection, storage location and maintenance, parties associated with the data collection such as employers, suppliers, administrative departments, legal considerations per location, other).

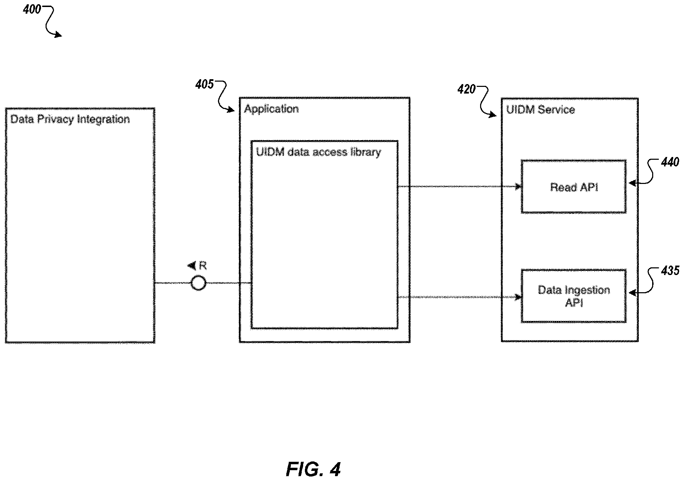

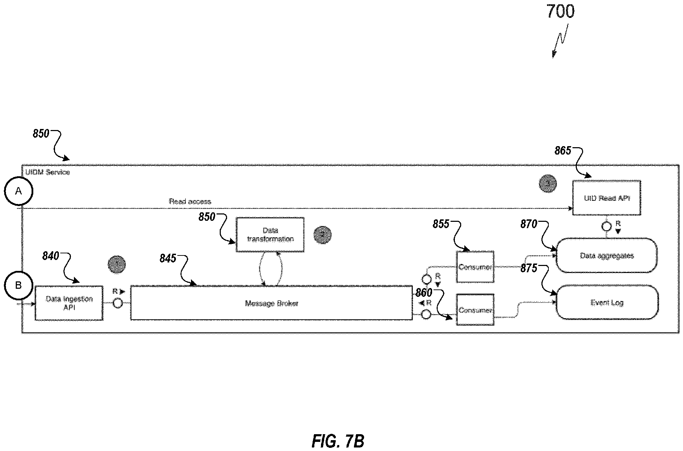

In some instances, a multi-purpose re-use service may be built and instantiated to interact with various software applications, products and systems to support collection, storage, and access management of user interaction data. Based on such data management, the user interaction data can be stored and provided for use by different product suppliers (and corresponding product teams) in a compliant manner with the regulations associated with the data. In some instances, the service can be a user interaction data management service (as described in relation to, e.g., UIDM Service 420 of FIG. 4 or UIDM Service 850 of FIG. 7B) that can implement the requirements for the compliant data collection and management for user interactions. In some instances, such multi-purpose re-use service may support centralized handling of compliance requirements which can be associated with lower total cost of ownership and can provide robust and efficient solutions for the various stakeholders including customers and end-users.

In some instances, data can be stored centrally and according to a prescribed event format that can support linking between user actions across product boundaries (e.g., different software products that are integrated to provide end-to-end process flows) allowing an end-to-end process view (as opposed to integrating multiple data stores and harmonizing their event format). In some instances, the stored data may be data collected from multiple instances running on a cloud platform that can be associated with one or multiple customer accounts. With such an approach, the data may be stored once and used in different contexts and for one or multiple purposes. In some implementations, administrators of customers of a cloud platform can configure features that require collection of data across software products and end-users can be provided with insight from such collected data. In some instances, transparency for data collection and rules applied for usage and sharing of data can be provided due to the centralization of the interaction data management.

In some implementations, the service for data interaction management can support the storage and retrieval of the user interaction data in a compliant manner. In some implementations, the service can store data for the purposes of data usage that can be configured for each or a combination of the customers and/or individual users (or based on user roles). If a purpose is allowed, the related data can be collected. If a purpose is not allowed, the service may reject the storage of the data. If data has already been stored and a customer or user changes the compliance rule for the data storage, the data can be deleted if there are no active other purposes that are relevant for maintaining the data storage.

In accordance with implementations of the present disclosure, user interaction data can be collected, stored, managed, and provided according to predefined rules and procedures that allow for consistent data handling aligned with complex business-to-business processes and interconnections between various environments, tools, processes, and one or multiple customers associated with at least some portions of the stored data. In some instances, such a service can provide an efficient way for implementing functionality for handling data management for multiple entities in a central manner while still allowing for processing requests that may be relevant for specific use cases and may require individually considered access rights. Data can be stored in a consolidated manner that reduces the usage of hardware storage and optimizes the data maintenance processes (e.g., handling data backup, data cleaning, etc.).

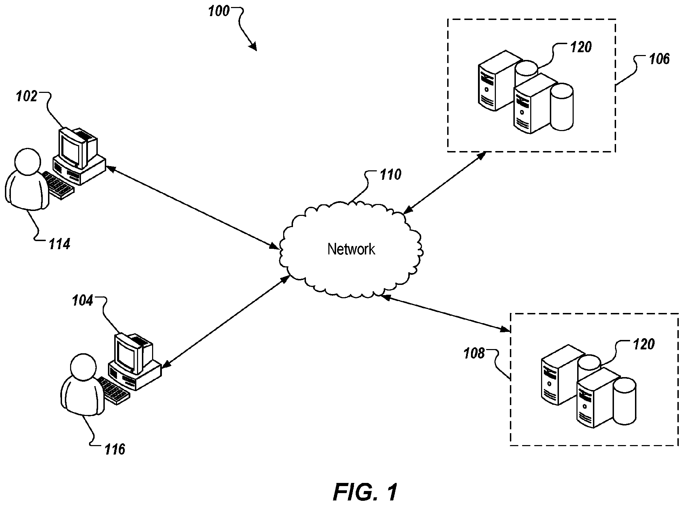

FIG. 1 depicts an example architecture 100 in accordance with implementations of the present disclosure. In the depicted example, the example architecture 100 includes a client device 102, a client device 104, a network 110, a cloud environment 106, and a cloud environment 108. The cloud environment 106 may include one or more server devices and databases (e.g., processors, memory). In the depicted example, a user 114 interacts with the client device 102, and a user 116 interacts with the client device 104.

In some examples, the client device 102 and/or the client device 104 can communicate with the cloud environment 106 and/or cloud environment 108 over the network 110. The client device 102 can include any appropriate type of computing device, for example, a desktop computer, a laptop computer, a handheld computer, a tablet computer, a personal digital assistant (PDA), a cellular telephone, a network appliance, a camera, a smart phone, an enhanced general packet radio service (EGPRS) mobile phone, a media player, a navigation device, an email device, a game console, or an appropriate combination of any two or more of these devices or other data processing devices. In some implementations, the network 110 can include a large computer network, such as a local area network (LAN), a wide area network (WAN), the Internet, a cellular network, a telephone network (e.g., PSTN), or an appropriate combination thereof connecting any number of communication devices, mobile computing devices, fixed computing devices and server systems.

In some implementations, the cloud environment 106 includes at least one server and at least one data store 120. In the example of FIG. 1, the cloud environment 106 is intended to represent various forms of servers including, but not limited to, a web server, an application server, a proxy server, a network server, and/or a server pool. In general, server systems accept requests for application services and provides such services to any number of client devices (e.g., the client device 102 over the network 110).

In accordance with implementations of the present disclosure, and as noted above, the cloud environment 106 can host applications and databases running on host infrastructure. In some instances, the cloud environment 106 can include multiple cluster nodes that can represent physical or virtual machines. A hosted application and/or service can run on VMs hosted on cloud infrastructure. In some instances, one application and/or service can run as multiple application instances on multiple corresponding VMs, where each instance is running on a corresponding VM.

In some implementations, user interaction data management can be implemented in the context of a software platform to build software products that manage data in a way that is adapted to individual requirements (per user or per account or tenant) and/or particular requirements and complexity of use cases implemented at one or more of the software products in a centralized manner. User interaction data management enables the efficient scaling of data management concepts (e.g., collection, storage, maintenance, deletion, and access policies) across an entire product portfolio by minimizing the effort of product development teams to deliver contextual experiences in the software products that they develop, build, and/or provision for use by customers or users.

In some instances, a user interaction data management service can be provided in communication with a platform environment (e.g., a platform solution). The user interaction data management service can be implemented as a standardized interaction data reuse service configured to execute a data review and approval process (e.g., a defined Data Protection & Privacy review/approval process) and rely on user interface (UI) templates for customers and end users to activate/deactivate features with regard to the managed data. The service can implement different features to define what data is collected and how the data is to be managed.

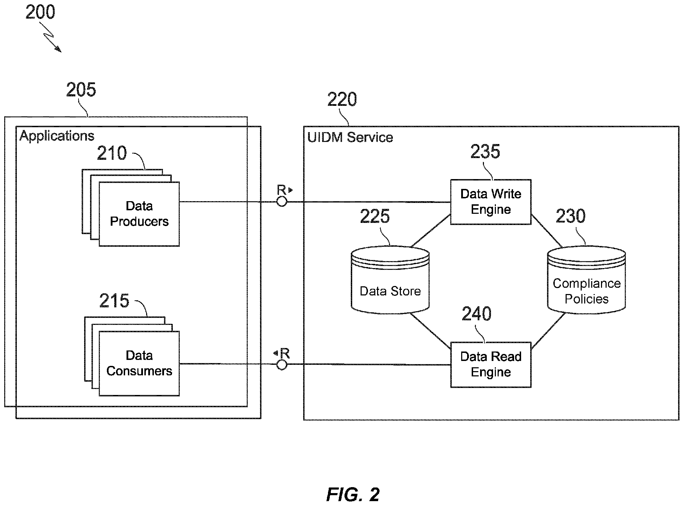

FIG. 2 depicts an example system 200 that can manage user interaction data records in accordance with implementations of the present disclosure. The example system 200 includes a set of applications 205 that are configured to collect and provide data to users in the context of performing tasks through the functionality implemented at the applications 205. The applications 205 can be part of a software platform solution that is integrated with a user interaction data management (UIDM) service 220 that can be used as a centralized service for managing data that is provided for storage by one or more of the applications 205 or provided to one or more of the applications 205 for consumption. The data storage and providing of access to that data can be handled in accordance with relevant compliance policies for the data as defined by the data providers and/or for the data consumers.

Each application 205 can include one or more data producers 210 and one or more data consumers 215. Data producers 210 produce user interaction data, whereas data consumers 215 consume user interaction data. A data producer 210 or a data consumer 215 can be implemented as an individual functionality or a service of the application. For example, a browser application 205 can include a search functionality as a data producer 210. As another example, an image editing application 205 can include an image viewer or editor functionality as a data producer 210.

In some cases, the one or more data producers 210 included in an application 205 are different from the one or more data consumers 215 included the application 205. That is, some of the capabilities or functionalities of the application can be data producers, while some others of the capabilities or functionalities of the application can be data consumers.

In other cases, the one or more data producers 210 included in an application 205 can be the same as the one or more data consumers 215 included the application 205. That is, some capabilities or functionalities of the application can be both data producers and data consumers.

One or more of the client devices, e.g., the client device 102 and the client device 104 in FIG. 1, can generate data that tracks user interactions with the applications 205. In this specification, the data that tracks user interactions will be referred to as "user interaction data."

Existing solutions do not provide logging and processing of user activities in products for personalization purposes. Also, even when data is stored, there are no re-usable capabilities provided by data storages to reduce the effort for collecting and managing such data. When data is stored, a relevant legal framework can be applied to implement data collection and management features, which cover specific use cases for the data storage and provision. Administrating such processes can be handled at a UIDM service, such as the UIDM service 220 of FIG. 2, so that end users can define processes and options for data management that align with the legal frameworks relevant to the type of data and the purposes of the data storage and use. If stored data is not provided with additional input for the available options for its use and the purposes of use, the data cannot be effectively used in executing processes at applications and/or automating tasks or process execution.

For example, the user interaction data can include the time and location of a user input made by a user of a client device while interacting with the application 205 to perform tasks. Examples of the user input include a keyboard input, mouse input, touch screen/display input, motion input, movement input, audio input, pointing device input, joystick input, keypad input, and so on. As another example, in the cases where the application 205 includes a graphical user interface (GUI), the user interaction data can include an UI element that is clicked on (e.g., selected) by each mouse click or touch input.

Interaction data recording can also have an effect on using the data for training prediction models. For example, in the context of labeling training data for AI models, where the productive AI model does not directly consume personal information. In some cases, identifying the user or role of the person who performed a series of actions may be the only way to link together the trigger, reason, and context via the manual steps to the resulting (trans)action related to a business object. A practical example is if a user searches for a "monitor" in a procurement application, the meaning and material classes depend on the department or industry (e.g. a computer display, heart-rate, or blood glucose monitor, seismic monitor, chemical concentration monitor, etc.). In that example, the material class could be determined based on the object that eventually receives the order, however, without recording the search and navigation actions, for example, via a user identifier (ID), the link between the search and order cannot be reconstructed efficiently.

The UIDM service 220 can be implemented as one or more components part of a software platform, e.g., in the cloud environment 106 and/or cloud environment 108 of FIG. 1. The UIDM service 220 includes a data write engine 235 and a data read engine 240 that are accessible by the data producers 210 and the data consumers 215 respectively of the applications 205 in the context of storing and accessing data in different user case scenarios.

The applications 205 transmit the user interaction data from the client devices to the UIDM service platform 220, and the data write engine 235 stores the user interaction data in accordance with a set of compliance policies 230 in a data store 225 that stores a collection of data records. The applications 205 generates requests for user interaction data, and the data read engine 240 provides the applications 205 with access to the user interaction data stored in data store 225, in accordance with the set of compliance policies 230. The data store 225 can be any repository for storing user interaction data transmitted from the client devices.

The set of compliance policies 230 includes policies that define how the data records should be stored in the data store 225. In some instances, the policies can be associated with different legal frameworks, e.g., General Data protection regulations (GDPR), or other data privacy regulations. For example, such data policies can define that personal data shall be collected for specified, explicit, and legitimate purposes and not further processed in a manner that is incompatible with those purposes, which can add complexity to defining software products that work and store personal data.

In some instances, the policies can define a respective retention period for each data record in the collection of data records stored in the data store 225. That is, the collection of data records includes data records that are subject to some policies specifying how long they are retained in the data store 225. Different ones of the data records might be subject to one or more different retention periods. For example, some of the data records might be subject to a 30-day retention period, some others of the data records might be subject to a 60-day retention period, while some others of the data records might be subject to a 90-day retention period. Generally, at or shortly after the expiration of the retention period, a data record can be deleted from the data store 225.

As another example, the data store 225 can include different sections, and the policies can define a respective section of the data store 225 within which each data record in the collection of data records should be stored. For example, the data store 225 can include different sections that correspond respectively to different applications and data records generated by different ones of the applications can each be stored in a respective section that corresponds to the application at which it is generated.

The set of compliance policies 230 includes policies that define how the data records should be provided in response to a request. As will be explained below, the policies can be defined with reference to the purposes of how the data records will be used. For example, the policies can include policies defining which purposes are allowed. As another example, the policies can include policies defining which purposes are blocked.

In some instances, the provided solution that integrates the UIDM service 220 into an application platform where various applications can be executed (such as the applications 205) can support the development of new software products and/or maintenance of already executing software products to be adapted to the particularities and complexity of the data collection and maintenance that is included in the respective software product and/or for a respective identified user(s) who works with the product.

In some instances, to achieve such a solution, the UIDM solution can be implemented by incorporating:
- implementation details of relevant legal bases (e.g. legitimate business interest, agreement) and determining, whether certain interactions can be stored or used for a specific purpose for a specific user under the legal framework.
- provide re-useable concepts and UIs, which allow development product teams to implement features that inform end users why the data is collected and explain how it is used to improve their experience with the product.
- provide a scalable, low-cost option to store and access the data securely and in compliance with data protection and privacy requirements defined for the product platform.

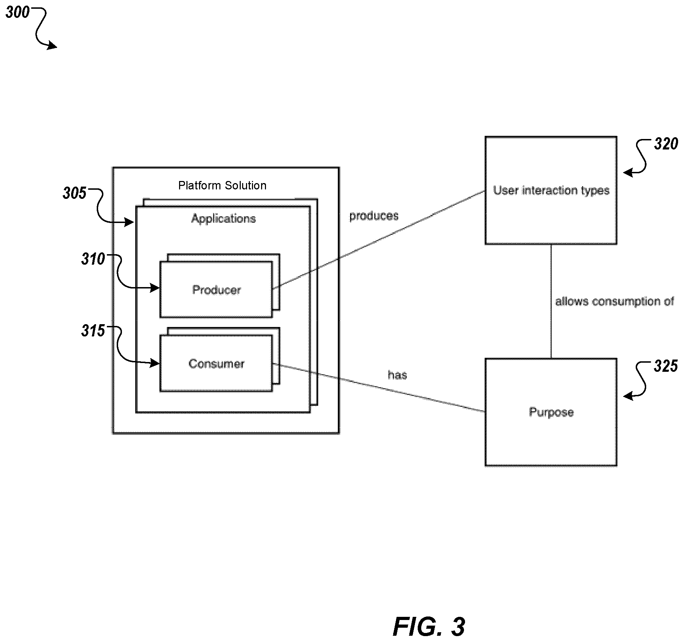

FIG. 3 is a block diagram of an example illustration 300 of components involved in managing user interaction data in accordance with implementations of the present disclosure. In some implementations, the architecture 100 of FIG. 1 can provide a software development platform. The software development platform may provide an integrated platform solution to extend applications 305 to client devices. In these implementations, the architecture 100 of FIG. 1 can be used to create new applications 305 or manage existing applications 305 for the client devices.

As previously mentioned, each application 305 can have one or more data producers 310 and/or one or more data consumers 315. A data producer 310 can generate user interaction data in one or more user interaction types 320. A data consumer 315 can specify one or more purposes 325 as part of a request for data records stored in the data store 225. The data read engine 240 determines whether to allow the data consumer 315 to consume the data records that are being requested based on the purposes.

A user interaction type 325 defines a specific type of data record that can be collected by a data producer 310 and consumed by a data consumer 315. As some general examples, mouse clicks can be one user interaction type, while keyboard inputs can be another user interaction type. As some more specific examples:
- A user interaction type can be "Enterprise Search Query". Data records having this user interaction type include the text entered by the user in a search box in a DWC (data warehouse Cloud) application and options for filter or sorting. A DWC application can be a cloud-based application that helps businesses manage data by consolidating data from the architecture 100 of FIG. 1 and third-party sources into a single environment.
- Another user interaction type can be "DWC Entity Editor Opened". Data records having this user interaction type include information about entities that the user has opened in an editor in the DWC application.
- Another user interaction type can be "S/4 Enterprise Search Query". Data records having this user interaction type include the text entered by the user in the search box in S/4 and options such as filters or sorting.

A developer of an application 305 can create new user interaction types that the developer wants to consume. Once created, the developer will need to uniquely identify or reference the specific user interaction types when interacting with the UIDM service 220 in order to access data records having the specific user interaction types.

An application 305 can produce data records that have a specific user interaction type. While some applications might produce data records that have multiple user interaction types, other applications may not produce any data records at all. For example:
- A "DWC Enterprise Search" functionality
   o produces data records that have the user interaction type of "DWC Enterprise Search Query"
   o produces data records that have the user interaction type of "DWC Enterprise Search Result List Click"
- A "DWC" functionality
   o produces data records that have the user interaction type of "DWC Entity Editor Opened"
- A "S/4 Enterprise Search" functionality
   o produces data records that have the user interaction type of "S/4 Enterprise Search Query"
   o produces data records that have the user interaction type of "S/4 Enterprise Search Result List Click"
- A "S/4" functionality
   o produces data records that have the user interaction type of "S/4 Entity Viewer Opened"
- A "S/4 Digital Assistant" application
   o Does not produce any data records in any user interaction types

A purpose 325 refers to a prospective purpose of how the data records that have a specific user interaction type that are being requested will be used as a data consumer 315. That is, a purpose describes the reason why the data consumer 315 needs the data records of that specific user interaction type. Therefore, a purpose may also be referred to as a "use case" or "prospective use case." A purpose needs to be defined by the data consumer 315 which wants to consume data records having one or more user interaction types. In some implementations, these purposes apply globally across all customers to all tenants of the UIDM service 220.

For example:
- The purpose of "Personalize my search results based on how I use DWC"
   o Allows a "DWC Enterprise Search" functionality
   o To consume
      - data records that have the user interaction type of "DWC Enterprise Search Query"
      - data records that have the user interaction type of "DWC Enterprise Search Result List Click"
      - data records that have the user interaction type of "DWC Entity Editor Opened"
- The purpose of "Personalize my search results based on how I use S/4"
   o Allows a "S/4 Enterprise Search" functionality
   o To consume
      - data records that have the user interaction type of "S/4 Enterprise Search Query"
      - data records that have the user interaction type of "S/4 Enterprise Search Result List Click"
      - data records that have the user interaction type of "S/4 Entity Viewer Opened"
- The purpose of "Improve Digital Assistant based on how I use S/4"
   o Allows a "S/4 Digital Assistant" functionality
   o To consume
      - data records that have the user interaction type of "S/4 Entity Viewer Opened"

### Interaction data producer and consumer

In some instances, two or more applications can be defined in the context of an integration scenario where some data (data of a given user interaction type) from one of the applications is to be provided for consumption by another application. In some cases, the data that is generated by the first application can be stored at a UIDM service together with data for the defined compliance policies that are defined for the stored data. In some instances, the compliance policies can define purpose(s) or use case(s) for which data can be stored and provided to different consumers. There can be a definition of different purposes that are available for the use of the data from two different consuming use case scenarios.

In some instances, a UIDM service can provide functionality that can allow for flexibility during the development of applications that can rely on the capabilities of the UIDM service to regulate the conditions and requirements of stored data in accordance with implementations of the present disclosure. The UIDM service can provide features to allow software products (e.g., applications) to maintain respective relevant policies for storing, maintaining, and providing data.

### Purpose Model

In some instances, a model and capability can be defined and used to determine whether stored user interaction type can be used for a particular purpose and based on requests from a particular application. For example, a purpose model may be used to determine whether out of three use cases (A, B, and C) using the data of the same User Interaction Type, use cases A and B fall under the same purpose, while use case C is linked to a separate purpose. The association of use cases for data of a given user interaction type and a purpose can be based on defined data storage and access restrictions or requirements that can be defined per application and/or for accounts associated with the application. The requirements associated with the data storage and allowed use cases can be defined in alignment with legal frameworks available and/or applications for the data and the location of the data storage. The purpose model can be application-oriented and tailored to the needs for declaring purposes for processing required data from various applications and in various execution contexts. In some instances, such a purpose model can be associated with a level of granularity for defining the purposes for the use of data of a given user interaction type. In some instances, one purpose X can encapsulate one or multiple use cases, and the purpose model can allow to define whether a purpose is associated with one or multiple software products/applications part of a platform solution for which the user interaction data is stored and managed.

### Purpose Check

Before any interaction data is stored by the data producer 310 or accessed by or provided (e.g., pushed) to a data consumer 315, a check can be performed to determine whether an appropriate policy exists for the specific purpose(s) which can be associated with a user account or a customer account.

A customer using the application 305 can configure on their individual tenant level whether they accept or activate the purpose(s) 325. In implementations, this means that, if a customer has accepted or activated a particular purpose 325, a data consumer 315 can only consume data records having the user interaction types associated with the particular specific purpose. Additionally, if at least one accepted or activated purpose exists for the customer's UIDM tenant, the application 305 will only produce data records having the user interaction types associated with the accepted or activated purpose.

### End User Concepts

When data is collected and stored in the context of a given application, a user whose data is collected can be made aware that a personalization feature is used or that such a feature can be activated. The user can be provided with awareness of such feature through user interface components that can be presented at the user interface of the application.

### Tenant Provisioning

In some instances, the data that is processed by the UIDM service can be separated by customers or tenants to comply with defined policies (e.g., data privacy regulations) and to simplify handling of different data retention requirements per account (e.g., tenant account, customer account, user account). If a multitenant approach is applied, a common infrastructure can be shared across all tenants, which can provide an efficient data management scheme while maintaining data isolation. When tenants are defined at the UIDM service, each tenant can be associated with a separate storage "area". The data separation can help to simplify the execution of configured processes for data retention, data deletion, or data export requests received by users and/or customers through applications or software products connected to the UIDM service. In cases where multitenancy is configured, one customer may be associated with a single account, and multiple subaccounts can be defined for different use cases or internal divisions within the account.

In some instances, an UIDM consuming application can create a subaccount for each consumer at the UIDM service, where a consumer of the UIDM service can have a defined global account with one or multiple sub-accounts. In this way, a customer can create subaccounts within a global account defined for the customer, where the subaccounts are for different consuming or producing applications and different policies for data management can be applied on account or sub-account level.

FIG. 4 is a block diagram of an example structure 400 of managing user interaction data in accordance with implementations of the present disclosure. In some implementations, a UIDM service platform 420 includes one or more application programming interfaces (APIs). The APIs includes a set of programmatic interfaces that expose, respectively, different functions of the UIDM service platform 420 to one or more applications 405 to utilize those functions. The APIs may be implemented as a representational state transfer (REST) interface and/or any other kind of API implementation or combination thereof.

For example, the APIs can include a data read API 440 that is configured to receive from (a data consumer of) an application 405 a request for data records. The data read API 440 exposes the functions of the data read engine 240 as discussed above in FIG. 2 to the application 405. As another example, the APIs can include a data ingestion API 435 that is configured to receive from (a data producer of) an application 405 data records that have been generated. The data ingestion API 435 exposes the functions of the data read write 235 as discussed above in FIG. 2 to the application 405.

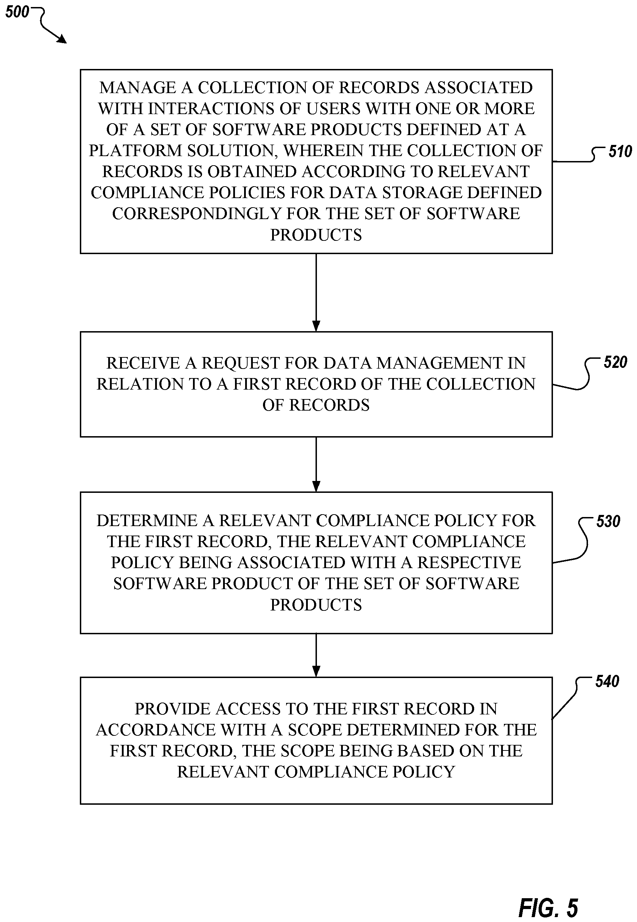

FIG. 5 is a flowchart for an example method 500 for providing access to user interaction data in accordance with implementations of the present disclosure.

At 510, a collection of data records is being managed in a data store. The collection of data records includes data records associated with interactions of users with one or more of a set of software products, e.g., applications, defined at a platform solution.

In some implementations, the interaction data is collected by a data write engine at a centralized storage space from a first software product from the set of software products defined at a platform solution. As part of the collection of the interaction data, the data write engine determines a relevant policy for storing the interaction data for the first software product.

In some implementations, the collection of records includes sets of records per software product of the set of software products. A first set of records for a first software product is associated with one or more users. A record of the first set of records associated with the first software product is obtained and managed based on rules defined in the relevant compliance policy for the first software product and for a first user associated with interaction data from the record.

In some instances, each record in the collection of records is subject to a respective retention period. The collection of records can be managed by determining (e.g., at regular intervals, upon request, according to a predefined schedule, etc.) that a respective retention period for a second record in the collection of records has expired; and in response, deleting the second record that has the expired respective retention period. In some cases, for each record, the respective list of allowed purposes of the user are defined with reference to the set of software products.

In some instances, the records can include interaction data for different products and the interaction data collected for a first software produced can be collected at a first centralized storage space, e.g., at a UIDM service, where the interaction data is stored together with relevant policy data defining allowed purposes for use with respect to one or more applications, accounts, roles, tenants, customers, or combination thereof.

In some instances, the collected interaction data can be analyzed to provide insight into a process execution through two or more software products of the set of software products. The process execution can be a cross-product process execution associated with multiple software products and multiple users interacting with the multiple software products.

At 520, a request for data management in relation to a first record of the collection of records is received. At 530, in response to receiving the request, a relevant compliance policy for the first record is determined. The relevant compliance policy is associated with a respective software product of the set of software products. At 540, access to the first record is provided in accordance with a scope determined for the first record. The scope is based on the relevant compliance policy.

Optionally, at 550, interaction data from the collection of records is analyzed to provide insight into a process execution through two or more software products of the set of software products. In some implementations, the process execution is a cross-product process execution associated with multiple software products and multiple users interacting with the multiple software products.

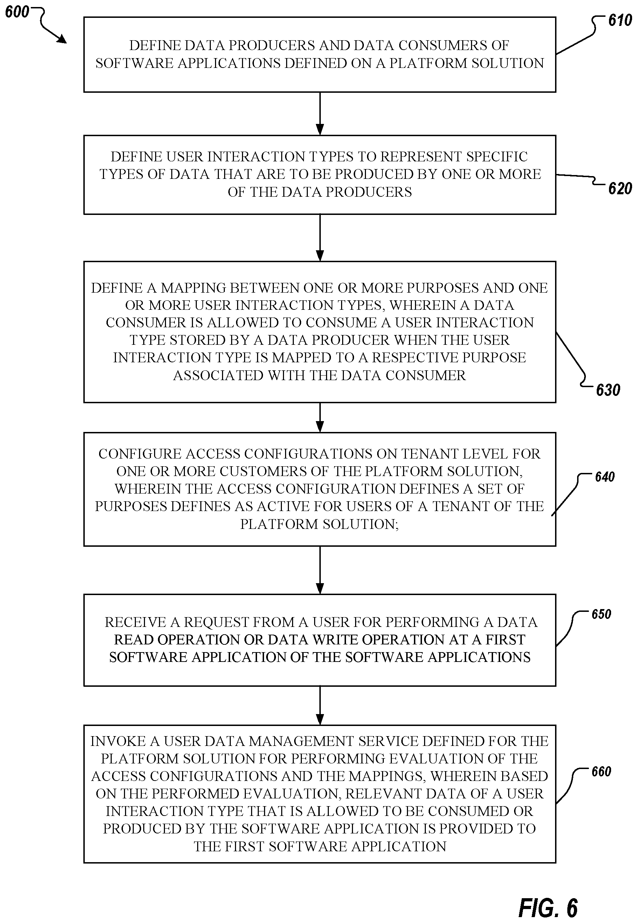

FIG. 6 is a flowchart for an example method 600 for managing user interaction data in accordance with implementations of the present disclosure.

At 610, data producers and data consumers of software applications defined on a platform solution are defined. A data consumer of the data consumers of the software applications can define a purpose(s) associated with providing access to consume at least one of the user interaction types. The purpose can be defined on the software application level and is usable for evaluating data access upon receiving requests from a user of an account defined for the platform solution.

At 620, user interaction types to represent specific types of data that are to be produced by one or more of the data producers are defined. In some implementations, the one or more user interaction types are distinct from each other and for example, are uniquely identifiable based on a unique identifier.

At 630, a mapping between one or more purposes and one or more user interaction types is defined. A data consumer is allowed to consume a user interaction type stored by a data producer when the user interaction type is mapped to a respective purpose associated with the data consumer.

At 640, access configurations on the tenant level for one or more customers of the platform solution are configured. The access configuration defines a set of purposes defined as active for users of a tenant of the platform solution.

At 650, a request is received from a user for performing a data read operation or data write operation at a first software application of the software applications. At 660, a user data management service defined for the platform solution for performing evaluation of the access configurations and the mappings is invoked. Based on the performed evaluation, relevant data of a user interaction type that is allowed to be consumed or produced by the software application is provided to the first software application.

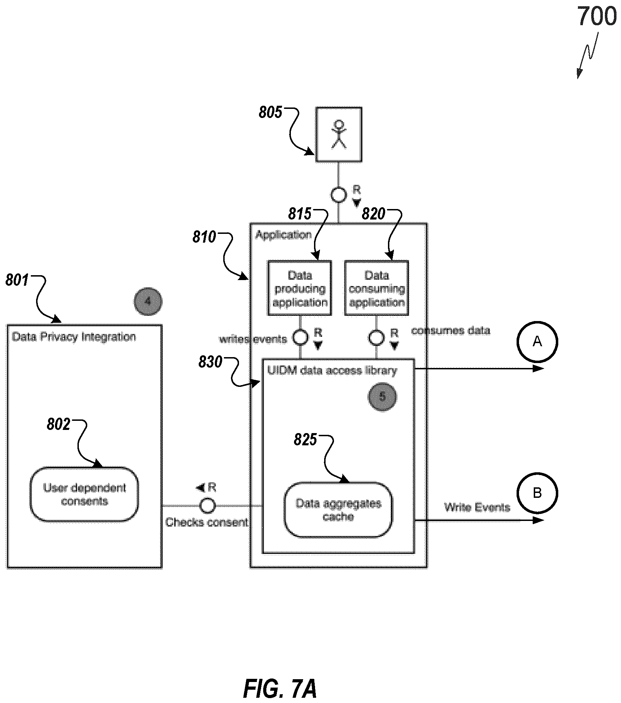

FIG. 7A is a part of a block diagram of example system 700 for implementing user interaction data management in accordance with implementations of the present disclosure. FIG. 7B is another part of the block diagram of example system 700 for implementing user interaction data management in accordance with implementations of the present disclosure. A UIDM service 850 can be configured to communicate with an application 810 and provide data management service, for example, as described in relation to FIG. 2 and UIDM service 220 and the applications 205. The application 810 can provide service to end users such as the end user 805 and can be connected to a data privacy integration 801 component where user dependent consents 802 can be stored. The user dependent consents 802 include data provided confirmation for acceptance or approval of terms for storing data from the application 810 at the UIDM 850 for one or multiple purposes, and for different user interaction types of data, as previously described.

The application 810 includes a data producing application 815 and a data consuming application 820 that substantially matches with the data producers 210 and data consumers 215 of FIG. 2. The application 810 includes a UIDM data access library 830 that receives event information from data producers for submitted data at the application 810 that is provided to be written at the UIDM service 850 through the data ingestion API 840. The UIDM data access library 830 also receives input for requested data to be consumed by the data consuming application 820. The UIDM data access library 830 can process such requests by sending a read request to the user interaction data read API 865 that can process the request and obtain relevant and/or available data associated with the consumed data from the data aggregates 870. The UIDM data access library 830 includes data aggregates cache 825 that are defined for different use cases or purposes of use so that data can be stored separately. The UIDM data access library 830 can be in communication with the data privacy integration 810 to perform consent checks when requests to read or write data by the data producers and data consumers are received. The obtained data by the UIDM data access library 830 is stored at the data aggregates cache 825 and distributed through the data ingestion API 840 to the message broker 845 for further processing and storage. The data aggregates 870 store data provided by data producers, such as the data producing application 815 and input through the message broker 845, where the data is aggregated in separate storage areas designated for respective use cases.

For situations in which the implementations of user interaction data management discussed here are subject to user dependent consent(s), (i) the end users of the applications or (ii) the tenants or customers of the UIDM service (e.g., through the respective tenant or customer accounts) may be provided to give an opportunity to enable/disable or otherwise control the feature(s) or other programs that may collect user interaction data. In some instances, the feature(s) can be functionality provided by applications to provide or obtain data through the UIDM service. In particular, some implementations of the user interaction data management can provide two types of configuration: (1) a first type of configuration (a "tenant level" configuration) where a tenant or customer can define the consents for all end users of the tenant or customer (e.g., all users defined for a tenant or customer account) and (2) a second type of configuration (a "user level" configuration) where individual end users can each define their respective consent. As one example, the two types of configuration allow to broadly enable a feature for all users of a tenant or customer account or to selectively enable a feature for a selected group of the users of the tenant or customer. In some instances, individual users associated with a tenant or customer account can be provided with the option to select to opt-out of (e.g. disable or otherwise make unavailable) a feature that was previously enabled for them through the feature being available for the tenant or customer account as part of the "tenant level" configuration (i.e., the first type of configuration discussed above). In some instances, the two types of configuration allow a tenant or customer to make a feature available to all users of the tenant or customer but keeps the feature deactivated for users unless an individual user had opted-in for the feature. within some cases, the individual users can be offered the capability to opt-in to, i.e., enable, the available feature that was previously deactivated for them by the customer.

### Data Ingestion

Interaction data events can occur in fluctuating and unpredictable patterns and mostly in high numbers. In some instances, the architecture of the example system 800 is an event-based architecture with a messaging component. In some instances, when there are click or search events executed at the application 810, a message broker 845 can receive information for such events. Every use case can have its own metadata, such as message format, etc. For a search use case, the message may include a user ID, an entity ID, and the timestamp. The UIDM data ingestion API 840 component can integrate the application 810 with the message. All events associated with data interaction can be stored, for example, at an event log 875, after they have been received by the message broker 845, and provided through a consumer 860 to the event log 875. The event log 875 can be a database that stores all events received at the UIDM service 850 that are to be processed so that user interaction data is stored together with respective data policies.

### Data Transformation

In some instances, the interaction data may be used by the consuming applications, such as the data consuming application 820, to support the execution of tasks or operations. In the context of a search example, the recently accessed entities can be ranked higher than entities that have not been used for some time. When data is requested to be provided, the data can be accessed from the data aggregates 870, where there are pre-defined sets of aggregated data suited for different specific use cases. When data is extracted from the data aggregates 870, for a given request associated with a particular use case (or purpose), data transformations can be performed at the data transformation 850 component. Data transformations can be applied on each event pipeline and the results of the data transformations can be stored in a storage, e.g., a database that is part of the UIDM service 850 or external and that is optimized for high performing read access operations.

### Application performs bulk/batch read

In some instances, the application 810 can request data covering multiple (and potentially all its) users based on a filter(s) such as date/time range, product/instance id, log type, etc. The size of the requested data may range from several megabytes to several gigabytes. For example, such a request may be in the context of executing training of a machine learning model, validation execution, or other analytics/reporting performance, among other examples. Depending on the specific scenario, the actual user ID might not be required. However, in some cases, it is required to allow join/merge with additional data, which is not logged as meta data of the log entry and resides in a source system.

### Application performs real-time read for individual user

In some instances, the application 810 can request data for a specified, individual user, with filters for date/time range, product/instance id, log type, etc. This could be used to obtain context data about a user, which is required for personalization use cases, e.g., to generate recommendations and search personalization. In such scenarios, the response latency needs to be very low. The access frequency of such scenarios by an individual application can be very high, as each individual user action that involves personalization might require the data. The UIDM library can take care of directly invoking the UID read APIs 865 to provide the data to the consumer (the data consuming application 820).

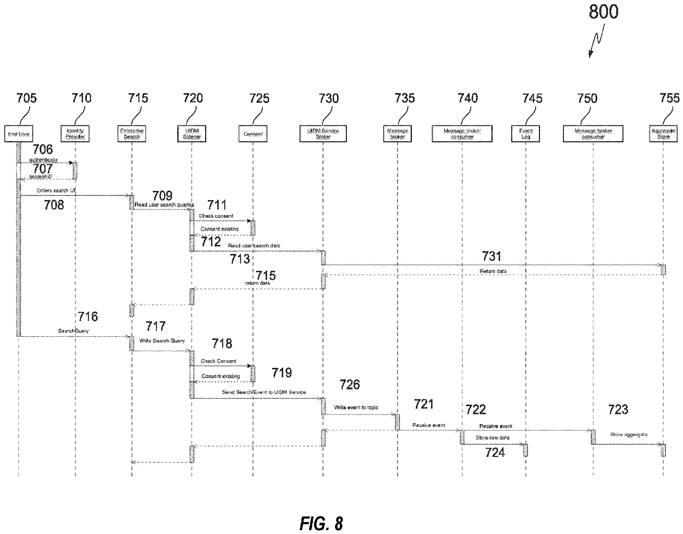

FIG. 8 is a sequence diagram 800 of an example method for managing user interaction data in accordance with implementations of the present disclosure. In particular, the sequence diagram 700 shows an example of managing user interaction data in an enterprise search use case, e.g., how an enterprise search functionality of an application can produce and consume data records. The enterprise search functionality is both a data producer and a data consumer.

When an end user 705 enters a Search UI provided by an application such as the applications 205 of FIG. 2 or application 810 of FIG. 7, the user 705 can be authenticated at an Identity Provider 710. At 706, the end user 705 requests authentication at the identity provider 710, and at 707, obtains a session ID. The end user 705 can be navigated, at 708, to the user interface of the search 715. As fast response times are essential for providing the search service, the user interaction data associated with executing a search can be requested from an UIDM service (e.g., such as the UIDM service 220 of FIG. 2 or the UIDM service 850 of FIG. 7) as soon as the user accesses the search. The UIDM access library (e.g., a sidecar application) 720 can perform a check, at 711, with a consent storage 725 of a data privacy integration component (e.g., the data privacy integration 801 of FIG. 7) to determine if consent exists for consuming the data requested by the end user 705 through the search UI 715. If positive, at 712, the UIDM access library 720 can trigger a call to the UIDM service to read the data. The request to read user search data 713 is sent to a UIDM service broker 730, which obtains the data from an aggregation store 755 and returns the data, at 715, to the UIDM sidecar 720.

With this initial request, the data is being "cached" within a local table that stores other search queries, e.g., the last 10 search queries are stored there. For example, when there is a search executed, the local 10 search queries are updated and also an event is sent to the UIDM service, so both data buckets are kept in sync. At 716, a search query can be sent by the end user 705 to the search UI 715, where the search query can be written, at 717, to the UIDM sidecar 720 that can perform a check for consent, at 718, and forwards the event to the UIDM service, at 719. The UIDM service broker 730 can write the event to a message broker 735 and send the event to a message broker consumer 740 that can store the event as raw data, at 724, or provide the event to a message broker consumer 750 to be stored (723) into an aggregate store 755 of multiple aggregates where data is stored in separate spaces divided by purpose.

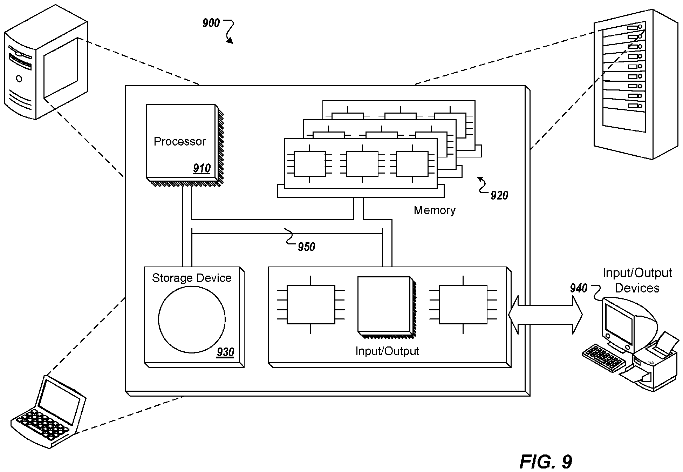

Referring now to FIG. 9, a schematic diagram of an example computing system 600 is provided. The system 900 can be used for the operations described in association with the implementations described herein. For example, the system 900 may be included in any or all of the server components discussed herein. The system 900 includes a processor 910, a memory 920, a storage device 930, and an input/output device 940. The components 910, 920, 930, and 940 are interconnected using a system bus 950. The processor 910 is capable of processing instructions for execution within the system 900. In some implementations, the processor 910 is a single-threaded processor. In some implementations, the processor 910 is a multi-threaded processor. The processor 910 is capable of processing instructions stored in the memory 920 or on the storage device 930 to display graphical information for a user interface on the input/output device 940.

The memory 920 stores information within the system 900. In some implementations, the memory 920 is a computer-readable medium. In some implementations, the memory 920 is a volatile memory unit. In some implementations, the memory 920 is a non-volatile memory unit. The storage device 930 is capable of providing mass storage for the system 900. In some implementations, the storage device 930 is a computer-readable medium. In some implementations, the storage device 930 may be a floppy disk device, a hard disk device, an optical disk device, or a tape device. The input/output device 940 provides input/output operations for the system 900. In some implementations, the input/output device 940 includes a keyboard and/or pointing device. In some implementations, the input/output device 940 includes a display unit for displaying graphical user interfaces.

The features described can be implemented in digital electronic circuitry, or in computer hardware, firmware, software, or in combinations of them. The apparatus can be implemented in a computer program product tangibly embodied in an information carrier (e.g., in a machine-readable storage device, for execution by a programmable processor), and method operations can be performed by a programmable processor executing a program of instructions to perform functions of the described implementations by operating on input data and generating output. The described features can be implemented advantageously in one or more computer programs that are executable on a programmable system, including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory, a random access memory, or both. Elements of a computer can include a processor for executing instructions and one or more memories for storing instructions and data. Generally, a computer can also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a cathode ray tube (CRT) or liquid crystal display (LCD) monitor for displaying information to the user and a keyboard and a pointing device such as a mouse or a trackball by which the user can provide input to the computer.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, for example, a LAN, a WAN, and the computers and networks forming the Internet.

The computer system can include clients and servers. A client and server are generally remote from each other and typically interact through a network, such as the described one. The relationship of client and server arises by virtue of computer programs running on the respective computers and having a client-server relationship to each other.

In addition, the logic flows depicted in the figures do not require the particular order shown, or sequential order, to achieve desirable results. In addition, other operations may be provided, or operations may be eliminated, from the described flows, and other components may be added to, or removed from the described systems. Accordingly, other implementations are within the scope of the following claims.

A number of implementations of the present disclosure have been described. Nevertheless, it will be understood that various modifications may be made without departing from the spirit and scope of the present disclosure.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Software implementations of the described subject matter can be implemented as one or more computer programs, that is, one or more modules of computer program instructions encoded on a tangible, non-transitory, computer-readable medium for execution by, or to control the operation of, a computer or computer-implemented system. Alternatively, or additionally, the program instructions can be encoded in/on an artificially generated propagated signal, for example, a machine-generated electrical, optical, or electromagnetic signal that is generated to encode information for transmission to a receiver apparatus for execution by a computer or computer-implemented system. The computer-storage medium can be a machine-readable storage device, a machine-readable storage substrate, a random or serial access memory device, or a combination of computer-storage mediums. Configuring one or more computers means that the one or more computers have installed hardware, firmware, or software (or combinations of hardware, firmware, and software) so that when the software is executed by the one or more computers, particular computing operations are performed. The computer storage medium is not, however, a propagated signal.

The terms "real-time," "real time," "realtime," "real (fast) time (RFT)," "near(ly) real-time (NRT)," "quasi real-time," or similar terms (as understood by one of ordinary skill in the art), means that an action and a response are temporally proximate, such that an individual perceives the action and the response occurring substantially simultaneously. For example, the time difference for a response to display (or for an initiation of a display) of data following the individual's action to access the data can be less than 1 millisecond (ms), less than 1 second (s), or less than 5 s. While the requested data need not be displayed (or initiated for display) instantaneously, it is displayed (or initiated for display) without any intentional delay, taking into account processing limitations of a described computing system and the time required to, for example, gather, accurately measure, analyze, process, store, or transmit the data.

The terms "data processing apparatus," "computer," "computing device," or "electronic computer device" (or an equivalent term as understood by one of ordinary skill in the art) refer to data processing hardware and encompass all kinds of apparatuses, devices, and machines for processing data, including by way of example, a programmable processor, a computer, or multiple processors or computers. The computer can also be or further include special-purpose logic circuitry, for example, a central processing unit (CPU), a graphics processing unit (GPU), a field-programmable gate array (FPGA), or an application-specific integrated circuit (ASIC). In some implementations, the computer or computer-implemented system or special-purpose logic circuitry (or a combination of the computer or computer-implemented system and special-purpose logic circuitry) can be hardware- or software-based (or a combination of both hardware- and software-based). The computer can optionally include code that creates an execution environment for computer programs, for example, code that constitutes processor firmware, a protocol stack, a database management system, an operating system, or a combination of execution environments. The present disclosure contemplates the use of a computer or computer-implemented system with an operating system, for example, LINUX, UNIX, WINDOWS, MAC OS, ANDROID, or IOS, or a combination of operating systems.

A computer program, which can also be referred to, or described as a program, software, a software application, a unit, a module, a software module, a script, code, or other component can be written in any form of programming language, including compiled or interpreted languages, or declarative or procedural languages, and it can be deployed in any form, including, for example, as a stand-alone program, module, component, or subroutine, for use in a computing environment. A computer program can, but need not, correspond to a file in a file system. A program can be stored in a portion of a file that holds other programs or data, for example, one or more scripts stored in a markup language document, in a single file dedicated to the program in question, or in multiple coordinated files, for example, files that store one or more modules, sub-programs, or portions of code. A computer program can be deployed to be executed on one computer or on multiple computers that are located at one site or distributed across multiple sites and interconnected by a communication network.

While portions of the programs illustrated in the various figures can be illustrated as individual components, such as units or modules, that describe features and functionality using various objects, methods, or other processes, the programs can instead include a number of subunits, sub-modules, third-party services, components, libraries, and other components, as appropriate. Conversely, the features and functionality of various components can be combined into single components, as appropriate. Thresholds used to make computational determinations can be statically, dynamically, or both statically and dynamically determined.

Described methods, processes, or logic flows represent one or more examples of functionality consistent with the present disclosure and are not intended to limit the disclosure to the described or illustrated implementations, but to be accorded the widest scope consistent with described principles and features. The described methods, processes, or logic flows can be performed by one or more programmable computers executing one or more computer programs to perform functions by operating on input data and generating output data. The methods, processes, or logic flows can also be performed by computers, and they can also be implemented as special-purpose logic circuitry, for example, a CPU, a GPU, an FPGA, or an ASIC.

Computers for the execution of a computer program can be based on general or special-purpose microprocessors, both, or another type of CPU. Generally, a CPU will receive instructions and data fand write to a memory. The essential elements of a computer are a CPU, for performing or executing instructions, and one or more memory devices for storing instructions and data. Generally, a computer will also include, or be operatively coupled to, receive data from, or transfer data to, or both, one or more mass storage devices for storing data, for example, magnetic, magneto-optical disks, or optical disks. However, a computer need not have such devices. Moreover, a computer can be embedded in another device, for example, a mobile telephone, a personal digital assistant (PDA), a mobile audio or video player, a game console, a global positioning system (GPS) receiver, or a portable memory storage device, for example, a universal serial bus (USB) flash drive, to name just a few.

Non-transitory computer-readable media for storing computer program instructions and data can include all forms of permanent/non-permanent or volatile/non-volatile memory, media, and memory devices, including by way of example semiconductor memory devices, for example, random access memory (RAM), read-only memory (ROM), phase change memory (PRAM), static random access memory (SRAM), dynamic random access memory (DRAM), erasable programmable read-only memory (EPROM), electrically erasable programmable read-only memory (EEPROM), and flash memory devices; magnetic devices, for example, tape, cartridges, cassettes, internal/removable disks; magneto-optical disks; and optical memory devices, for example, digital versatile/video disc (DVD), compact disc (CD)-ROM, DVD+/-R, DVD-RAM, DVD-ROM, high-definition/density (HD)-DVD, and BLU-RAY/BLU-RAY DISC (BD), and other optical memory technologies. The memory can store various objects or data, including caches, classes, frameworks, applications, modules, backup data, jobs, web pages, web page templates, data structures, database tables, repositories storing dynamic information, or other appropriate information including any parameters, variables, algorithms, instructions, rules, constraints, or references. Additionally, the memory can include other appropriate data, such as logs, policies, security or access data, or reporting files. The processor and the memory can be supplemented by or incorporated into special-purpose logic circuitry.

To provide for interaction with a user, implementations of the subject matter described in this specification can be implemented on a computer having a display device, for example, a cathode ray tube (CRT), liquid crystal display (LCD), light emitting diode (LED), or plasma monitor, for displaying information to the user and a keyboard and a pointing device, for example, a mouse, trackball, or trackpad by which the user can provide input to the computer. Input can also be provided to the computer using a touchscreen, such as a tablet computer surface with pressure sensitivity or a multi-touch screen using capacitive or electric sensing. Other types of devices can be used to interact with the user. For example, feedback provided to the user can be any form of sensory feedback (such as, visual, auditory, tactile, or a combination of feedback types). Input from the user can be received in any form, including acoustic, speech, or tactile input. In addition, a computer can interact with the user by sending documents to and receiving documents from a client computing device that is used by the user (for example, by sending web pages to a web browser on a user's mobile computing device in response to requests received from the web browser).

The term "graphical user interface (GUI) can be used in the singular or the plural to describe one or more graphical user interfaces and each of the displays of a particular graphical user interface. Therefore, a GUI can represent any graphical user interface, including but not limited to, a web browser, a touch screen, or a command line interface (CLI) that processes information and efficiently presents the information results to the user. In general, a GUI can include a number of user interface (UI) elements, some or all associated with a web browser, such as interactive fields, pull-down lists, and buttons. These and other UI elements can be related to or represent the functions of the web browser.

Implementations of the subject matter described in this specification can be implemented in a computing system that includes a back-end component, for example, as a data server, or that includes a middleware component, for example, an application server, or that includes a front-end component, for example, a client computer having a graphical user interface or a Web browser through which a user can interact with an implementation of the subject matter described in this specification, or any combination of one or more such back-end, middleware, or front-end components. The components of the system can be interconnected by any form or medium of wireline or wireless digital data communication (or a combination of data communication), such as a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11x or other protocols, all or a portion of the Internet, another communication network, or a combination of communication networks. The communication network can communicate with, for example, Internet Protocol (IP) packets, frame relay frames, Asynchronous Transfer Mode (ATM) cells, voice, video, data, or other information between network nodes.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of any inventive concept or on the scope of what can be claimed, but rather as descriptions of features that can be specific to particular implementations of particular inventive concepts. Certain features that are described in this specification in the context of separate implementations can also be implemented, in combination, or in a single implementation. Conversely, various features that are described in the context of a single implementation can also be implemented in multiple implementations, separately, or in any sub-combination. Moreover, although previously described features can be described as acting in certain combinations and even initially claimed as such, one or more features from a claimed combination can, in some cases, be excised from the combination, and the claimed combination can be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations can be considered optional), to achieve desirable results. In certain circumstances, multitasking or parallel processing (or a combination of multitasking and parallel processing) can be advantageous and performed as deemed appropriate.

The separation or integration of various system modules and components in the previously described implementations should not be understood as requiring such separation or integration in all implementations, and it should be understood that the described program components and systems can generally be integrated together in a single software product or packaged into multiple software products.

Accordingly, the previously described example implementations do not define or constrain the present disclosure. Other changes, substitutions, and alterations are also possible without departing from the scope of the present disclosure.

Furthermore, any claimed implementation is considered to be applicable to at least a computer-implemented method; a non-transitory, computer-readable medium storing computer-readable instructions to perform the computer-implemented method; and a computer system comprising a computer memory interoperably coupled with a hardware processor configured to perform the computer-implemented method or the instructions stored on the non-transitory, computer-readable medium.

### EXAMPLES

Although the present application is defined in the attached claims, it should be understood that the present invention can also (alternatively) defined in accordance with the following examples:

### Providing Data Access to Shared Data

Example 1. A computer-implemented method, comprising:
managing a collection of records associated with interactions of users with one or more of a set of software products defined at a platform solution, wherein the collection of records is obtained according to relevant compliance policies for data storage defined correspondingly for the set of software products; and
in response to receiving a request for data management in relation to a first record of the collection of records,
   determining a relevant compliance policy for the first record, the relevant compliance policy being associated with a respective software product of the set of software products; and
   providing access to the first record in accordance with a scope determined for the first record, the scope being based on the relevant compliance policy.

Example 2. The method of Example 1, wherein each record in the collection of records is subject to a respective retention period, and wherein managing the collection of records comprises:
determining that a respective retention period for a second record in the collection of records has expired; and
in response, deleting the second record that has the expired respective retention period.

Example 3. The method of any one of the preceding Examples, wherein the request in relation to the first record specifies a prospective purpose of use of the first record, and wherein each record in the collection of records is associated with a respective list of allowed purposes of use of a plurality of defined purposes of use for the collection of records defined at the platform solution.

Example 4. The method of Example 3, wherein for each record, the respective list of allowed purposes of user are defined with reference to set of software products.

Example 5. The method of any one of the preceding Examples, comprising:
collecting interaction data at a centralized storage space from a first software product from the set of software products defined at a platform solution, wherein collecting the interaction data comprises determining a relevant policy for storing the interaction data for the first software product.

Example 6. The method of any one of the preceding Examples, wherein the collection of records includes sets of records per software product of the set of software products, wherein a first set of records for a first software product is associated with one or more users, wherein a record of the first set of records associated with the first software product is obtained and managed based on rules defined in the relevant compliance policy for the first software product and for a first user associated with interaction data from the record.

Example 7. The method of any one of the preceding Examples, comprising:
analyzing interaction data from the collection of records to provide insight into a process execution through two or more software products of the set of software products, wherein the process execution is a cross-product process execution associated with multiple software products and multiple users interacting with the multiple software products.

Example 8. A non-transitory, computer-readable medium storing one or more instructions executable by a computer system to perform one or more operations according to the method of any one of Examples 1 to 7.

Example 9. A computer-implemented system, comprising:
one or more computers; and
one or more computer memory devices interoperably coupled with the one or more computers and having tangible, non-transitory, machine-readable media storing one or more instructions that, when executed by the one or more computers, perform one or more operations according to the method of any one of Examples 1 to 7.

### Data Collection and Storage

Example 1. A computer-implemented method for managing user interaction data, the method comprising:
defining data producers and data consumers of software applications defined on a platform solution;
defining user interaction types to represent specific types of data that are to be produced by one or more of the data producers;
defining a mapping between one or more purposes and one or more user interaction types, wherein a data consumer is allowed to consume a user interaction type stored by a data producer when the user interaction type is mapped to a respective purpose associated with the data consumer;
configuring access configurations on tenant level for one or more customers of the platform solution, wherein the access configuration defines a set of purposes defines as active for users of a tenant of the platform solution; and
in response to receiving a request from a user for performing a data read operation or data write operation at a first software application of the software applications, invoking a user data management service defined for the platform solution for performing evaluation of the access configurations and the mappings, wherein based on the performed evaluation, relevant data of a user interaction type that is allowed to be consumed or produced by the software application is provided to the first software application.

Example 2. The method of any one of the preceding Examples, wherein the one or more user interaction types are uniquely identifiable.

Example 3. The method of any one of the preceding Examples, wherein a data consumer of the data consumers of the software applications defines a purpose associated with providing access to consume at least one of the user interaction types.

Example 4. The method of any one of the preceding Examples, wherein the purpose is defined on software application level and is usable for evaluating data access upon receiving requests from a user of an account defined for the platform solution.

Example 5. The method of any one of the preceding Examples, wherein a single purpose is associated with a single or multiple user interaction types.

Example 6. The method of any one of the preceding Examples, comprising:
configuring the user data management service to store a collection of records of user interaction types associated with interactions of users interacting with one or more of the software applications defined at the platform solution, wherein the collection of records is obtained by the data producers according to relevant compliance policies for data storage defined correspondingly for the software applications at the platform solution.

Example 7. The method of Example 6, comprising:
collecting, at the user data management service, interaction data at a centralized storage space from a first software product from the set of software products defined at a platform solution, wherein collecting the interaction data comprises determining a relevant policy for storing the interaction data for the first software product.

Example 8. The method of Example 6, wherein the collection of records includes sets of records per software product of the set of software products, wherein a first set of records for a first software product is associated with one or more users, wherein a record of the first set of records associated with the first software product is obtained and managed based on rules defined in the relevant compliance policy for the first software product and for a first user associated with interaction data from the record.

Example 9. The method of any one of Example 6 or Example 7, comprising:
analyzing interaction data from the collection of records to provide insight into a process execution through two or more software products of the set of software products, wherein the process is a cross-product process associated with multiple software products and multiple users interacting with the multiple software products.

Example 10. A non-transitory, computer-readable medium storing one or more instructions executable by a computer system to perform one or more operations according to the method of any one of Examples 1 to 9.

Example 11. A computer-implemented system, comprising:
one or more computers; and
one or more computer memory devices interoperably coupled with the one or more computers and having tangible, non-transitory, machine-readable media storing one or more instructions that, when executed by the one or more computers, perform one or more operations according to the method of any one of Examples 1 to 9.

## Claims

1. A computer-implemented method, comprising:
managing a collection of records associated with interactions of users with one or more of a set of software products defined at a platform solution, wherein the collection of records is obtained according to relevant compliance policies for data storage defined correspondingly for the set of software products; and
in response to receiving a request for data management in relation to a first record of the collection of records,
determining a relevant compliance policy for the first record, the relevant compliance policy being associated with a respective software product of the set of software products; and
providing access to the first record in accordance with a scope determined for the first record, the scope being based on the relevant compliance policy.

2. The method of claim 1, wherein each record in the collection of records is subject to a respective retention period, and wherein managing the collection of records comprises:
determining that a respective retention period for a second record in the collection of records has expired; and
in response, deleting the second record that has the expired respective retention period.

3. The method of any one of claims 1-2, wherein the request in relation to the first record specifies a prospective purpose of use of the first record, and wherein each record in the collection of records is associated with a respective list of allowed purposes of use of a plurality of defined purposes of use for the collection of records defined at the platform solution.

4. The method of claim 3, wherein for each record, the respective list of allowed purposes of user are defined with reference to set of software products.

5. The method of any one of claims 1-4, comprising:
collecting interaction data at a centralized storage space from a first software product from the set of software products defined at a platform solution, wherein collecting the interaction data comprises determining a relevant policy for storing the interaction data for the first software product.

6. The method of any one of claims 1-5, wherein the collection of records includes sets of records per software product of the set of software products, wherein a first set of records for a first software product is associated with one or more users, wherein a record of the first set of records associated with the first software product is obtained and managed based on rules defined in the relevant compliance policy for the first software product and for a first user associated with interaction data from the record.

7. The method of any one of claims 1-6, comprising:
analyzing interaction data from the collection of records to provide insight into a process execution through two or more software products of the set of software products, wherein the process execution is a cross-product process execution associated with multiple software products and multiple users interacting with the multiple software products.

8. A non-transitory, computer-readable medium storing one or more instructions executable by a computer system to perform one or more operations according to the method of any one of claims 1 to 7.

9. A computer-implemented system, comprising:
one or more computers; and
one or more computer memory devices interoperably coupled with the one or more computers and having tangible, non-transitory, machine-readable media storing one or more instructions that, when executed by the one or more computers, perform one or more operations according to the method of any one of claims 1 to 7.
